# EUROPEAN PATENT SPECIFICATION

(11) **EP 2 038 631 B1**
(45) Date of publication and mention of the grant of the patent: **13.10.2010**
(21) Application number: 06757816.1
(22) Date of filing: 30.06.2006
(51) Int. Cl.: G01M 13/02

(54) **PUSHBELT TEST METHOD AND TEST DEVICE FOR CARRYING OUT SUCH METHOD**
SCHUBRIEMENTESTVERFAHREN UND TESTVORRICHTUNG ZUR DURCHFÜHRUNG SOLCH EINES VERFAHRENS
PROCEDE D'ESSAI DE COURROIE DE POUSSEE ET DISPOSITIF D'ESSAI POUR REALISER UN TEL PROCEDE

(43) Date of publication of application: 25.03.2009
(73) Proprietor: Robert Bosch GmbH, 70442 Stuttgart (DE)
(72) Inventor: TRAN, Minh-Duc, NL-5348 GC Oss (NL); VAN DER VINNE, Johannes Menno, NL-6841 AS Arnhem (NL); VAN CROMVOIRT, Petrus Johannes, 5146 BE Waalwijk (NL); VAN GINKEL, Teunis Evert, NL-4021 VA Maurik (NL); PENNINGS, Bert, NL-5052 CH Goirle (NL); BRANDSMA, Arjen, NL-5045 WN Tilburg (NL)
(74) Representative: Plevier, Gabriel Anton Johan Maria
(86) International application number: PCT/NL2006/000326
(87) International publication number: WO 2008/002125

(56) References cited:
- US-A- 3 739 632
- US-A- 4 240 283

## Description

The present invention relates to a test method for a pushbelt, in particular for monitoring a pushbelt manufacturing process, wherein the quality of the end-product pushbelt is tested by determining the functional lifespan, alternatively denoted life-cycle testing, of a randomly sampled specimen.

The pushbelt as such is generally known, for example from the European patent application EP-A 1 089 013, and is predominantly used as the means for power transmission between two adjustable pulleys of the well-known continuously variable transmission that is mainly applied in motor vehicles. The known pushbelt is composed of a multitude of relatively thin transverse metal elements that are slideably incorporated on one or more endless tensile means that are each composed of at least one flat metal ring. Typically, however, the endless tensile means comprises two laminated sets of a number of such rings that are mutually radially nested. The pushbelt ring component is normally made from a Maraging steel that a/o provides the material properties of great tensile strength combined with a great resistance against metal fatigue, which properties are required for the application of the pushbelt in motor vehicle transmissions.

The quality of the pushbelt is stringently monitored to ensure that it meets a pre-determined high standard, such that the risk of premature failure of the pushbelt during actual application is only minimal. Such quality monitoring will normally include non-destructive tests, such as optical inspection of the ring and transverse element components of the pushbelt for removing damaged components from the manufacturing process, as well as measurements of the dimensional accuracy of those components for removing those that are inaccurately produced. The said quality monitoring typically also includes destructive testing, such as base material tensile stress and component fatigue strength testing. This type of test method can, obviously, be performed on a limited number of specimens only.

In day-to-day practice of pushbelt manufacture it has, however, proven indispensable that in addition to the aforementioned tests, also -randomly selected specimen of- the end-product pushbelts are subjected to destructive testing, in particular to life-cycle fatigue testing of its tensile means at test conditions that are preferably equivalent with, but at least representative of the belt's intended application. Such tests being required because of the complex of forces and/or movements that occur during normal operation of the pushbelt between the many individual transverse element and ring components thereof, as well as between the pushbelt and the transmission pulleys. This complex of forces could not yet be satisfactorily broken-up into its relevant, individually defined and mutually unrelated constituents. That is to say that even in combination the known component test methods do not provide a technically and/or economically viable substitution for the tensile means life-cycle fatigue test by means of destructive end-product testing.

The United States patent publication US-A-4,240,283 relates to an apparatus for testing a power transmission belt. The known test apparatus includes a driving test pulley and a driven test pulley that can be moved apart in a radial sense by means of a screw spindle, in order to tension the belt to be tested. In this known test apparatus the driven test pulley is connected to a load, such as a water wheel or a parallel driving mechanism between the driving and the driven pulleys, which parallel driving mechanism provides a speed ratio between said pulleys that differs from a speed ratio provided there between by the said belt to be tested.

Still, the known destructive end-product test method comes with the disadvantages that it is extremely cost intensive, since the test conditions are representative of the load conditions over the intended and statistically defined service life of the pushbelt. For example, a typical destructive test for the pushbelt for automotive, i.e. vehicular, application, includes several 100 hours of testing in the transmission that is placed on a test bench between an electric motor and a brake, with the motor generating a power that is equivalent to the maximum engine power of the intended application the whole time.

It is an object of the present invention to provide for a destructive end-product test method that is less cost intensive than the hitherto applied method, while still satisfying the requirement that the test result is representative of the pushbelt service life that will be observed in practice, i.e. in the actual application thereof in a vehicle. According to the invention such is realised by the test method of present claim 1. It has been experimentally verified that the novel test method indeed can produce results that are similar to the previously applied method and, more importantly, that are also statistically representative of the actual pushbelt service life when applied in a vehicle.

The main improvement of this novel method is a considerable decrease of the power to be generated by the motor and thus also the total amount of energy consumed during the test, whereby the fixed (i.e. constructional) and variable (i.e. operational) cost of the test bench can be dramatically lowered. In the method according to the invention the load on the belt, in particular the fatigue loading of the tensile means thereof, is realised to a significant extent statically by the mere tensioning of the belt. Hereby, such tensioning is considerably in excess of what is minimally required to be able to transmit the torque generated by the motor by means of friction between the belt and the pulleys. The method according to the invention allows a much lower torque to be transmitted, i.e. allows the motor the generate a power that is much less than the maximum engine power of the intended application, while the belt is still subjected to the high load conditions that reflect those of the intended application.

In fact it is rather surprising that the latter test method yields representative test results, since it is well known that metal fatigue is determined primarily by the amplitude of tensile stress variations, whereby the average static level of the tensile stress is only of secondary importance. So, merely increasing the tensile stress level, in this case by the said tensioning of the belt in excess of what is required to transmit the motor torque, will typically not be expected to be representative of an increased fatigue load in the actual application, in this case represented by an increased engine torque. However, in relation to the pushbelt it was surprisingly discovered that representative test results could be obtained by the novel method.

According to the invention the novel test method relies on and conveniently makes use of a special feature of the pushbelt, which separates it from other types of transmission belts. With the pushbelt the engine torque is transmitted between the pulleys of the transmission predominantly through a compressive force exerted between the transverse elements of the belt, which force is realised by means of friction with the driving pulley and which force causes a torque to be generated on the driven pulley also by means of friction. A primary function of the tensile means of the pushbelt is thereby to prevent the array of individual transverse elements between the driving and the driven pulley from buckling under influence of the compressive force exerted there between. So during normal operation the tensile means needs to be tensioned only to the extent that is required for allowing the transverse elements to transmit the engine torque without buckling, i.e. without bursting apart. Still, during operation of the pushbelt, also a tensile stress amplitude is generated in the tensile means as a result of friction with the transverse elements. However, such tensile stress amplitude varies only slightly in relation to the torque transmitted. Moreover, such tensile stress amplitude is small in comparison with the stress amplitude in a continuous belt or chain, wherein the entire driven pulley torque is generated by a difference in belt tension between the entrance and the exit side of the driven pulley.

According to the present invention, the effect of a high engine torque on the fatigue loading of the pushbelt can indeed be represented by an additional static tensioning of the belt at a lower engine torque. All the more so, because by the additional static tensioning of the tensile means, the friction force between the transverse elements and the tensile means increases automatically, as does the said tensile stress amplitude that results there from. Of course, the overall fatigue loading of the tensile means is to a significant extent determined by a cyclically varying bending stress anyway, which stress results from the tensile means being bent and stretched in longitudinal direction during its rotation in the transmission, i.e. is independent of the engine torque.

Preferably, the radially outwardly oriented forces exceed what is minimally required for the belt to be able to transmit the said input torque by a factor of 1.5 or more, preferably by a factor of more than 2. Other test conditions, besides the engine torque, are preferably set to correspond with those in the actual application. Such conditions for example including the parameters of a running radius of the pushbelt at the driving and at the driven pulley as well as its rotational speed.

Further according to the invention, in a specific embodiment of the novel test method, the application engine torque is not a test parameter at all, i.e. the output, or driven side of the transmission is not connected to a load (such as the aforementioned test bench brake) at all, so that no output (counter) torque is applied to the driven pulley. This means that the above-mentioned factor becomes very large, i.e. approaches infinity at least in relation to the driven pulley. In this particular embodiment of the test method the motor generates only a relatively small torque, merely compensating for the power losses, to keep the transmission rotating. The fatigue loading of the tensile means than almost entirely being realised by the static tensioning of the pushbelt while it is being rotated.

Preferably additionally, but possibly alternatively, to the above described improvements on the known life-cycle fatigue test, also the time required to perform the test can be improved upon according to the present invention. By subjecting the pushbelt to a fatigue loading that exceeds that of the intended application, the test duration until failure, i.e. until the fatigue fracture of the tensile means, is shortened. It has been experimentally verified that this latter test method indeed produces results that are similar to the previously applied method and, more importantly, that are also statistically representative of the actual pushbelt service life when applied in a vehicle.

The invention further relates to a test device for carrying out pushbelt life-cycle testing, in particular capable of carrying out the test method in accordance with the present invention. A typical setup of a conventional test device is described in EP-A-1.369.618. The known test device comprises an adjustable driving and an adjustable driven pulley, each having two frusto-conical pulley sheaves placed on a pulley shaft and at least one sheave of each pulley being fitted axially movable relative to the respective pulley shaft under the influence of a hydraulic pressure exerted in a cylinder chamber of a piston/cylinder-assembly associated with such moveable sheave. The pushbelt is fitted around the pulley shafts, while being clamped between the sheaves of the respective pulleys as a result of the respectively exerted cylinder pressure. In fact, the setup of such known test device basically corresponds to the actual vehicle transmission.

The axially oriented pulley clamping force is exerted on the lateral side faces of the transverse elements of the pushbelt via the conical surface of the pulley sheaves, such that a normal force is realised there between and such that the transverse elements are forced radially outward. Since such radially outwardly oriented force occurs at both pulleys, the tensile means of the pushbelt is tensioned thereby. The said normal force in turn allows a torque to be transmitted from the driving to the driven pulley by means of friction between the pulleys and the transverse elements.

A disadvantage of the known test device is that the piston/cylinder-assemblies rotate, which feature, especially in combination with the relatively high cylinder pressures (e.g. up to 80 bar) that need to be applied, causes a considerable leakage of hydraulic fluid from the cylinders that needs to be compensated for by means of an essentially continuously operating pump. Therefore and also because of the intricate design of the pulleys, the known test device is rather expensive, both to construct and to operate.

It is an object of the present invention to provide for a test device for carrying out pushbelt life-cycle testing that is cheaper to operate than the known device and preferably also easier to construct. According to the invention such is realised by the test device of present claim 3.

In the test device according to the invention two fixed pulleys are applied, i.e. pulleys without an axially moveable sheave, which pulleys can be moved radially apart by means of a shaft displacement means of the device acting on at least one of the pulley shafts. The said clamping forces and said tensioning of the tensile means then being realised by forcing the pulley shafts radially apart by means of the shaft displacement means, while the pushbelt is mounted around the pulleys.

The test device according to the invention is also provided with a motor or engine directly connected to the driving pulley. Further, the test device may be provided with a brake directly connected to the driven pulley. However, if the test device is used for carrying out the test method in accordance with the present invention, the brake is not required.

A detailed embodiment of the invention is described hereinafter along the accompanying figures.
Figure 1 diagrammatically depicts a cross-section of the known continuously variable transmission provided with two pulleys and a pushbelt.
Figure 2 shows a simplified side elevation of the transmission shown in figure 1.
Figure 3 shows a cross-section of the known pushbelt facing in the longitudinal direction thereof.
Figure 4 schematically illustrates a known test device for testing the fatigue strength of the known pushbelt.
Figure 5 schematically illustrates an improved test device according to the present invention for testing the fatigue strength of the known pushbelt.
Figure 6 is a diagram providing the results of life-cycle fatigue tests performed on the pushbelt using a test device according to the invention in comparison with test results obtained with a known test device.

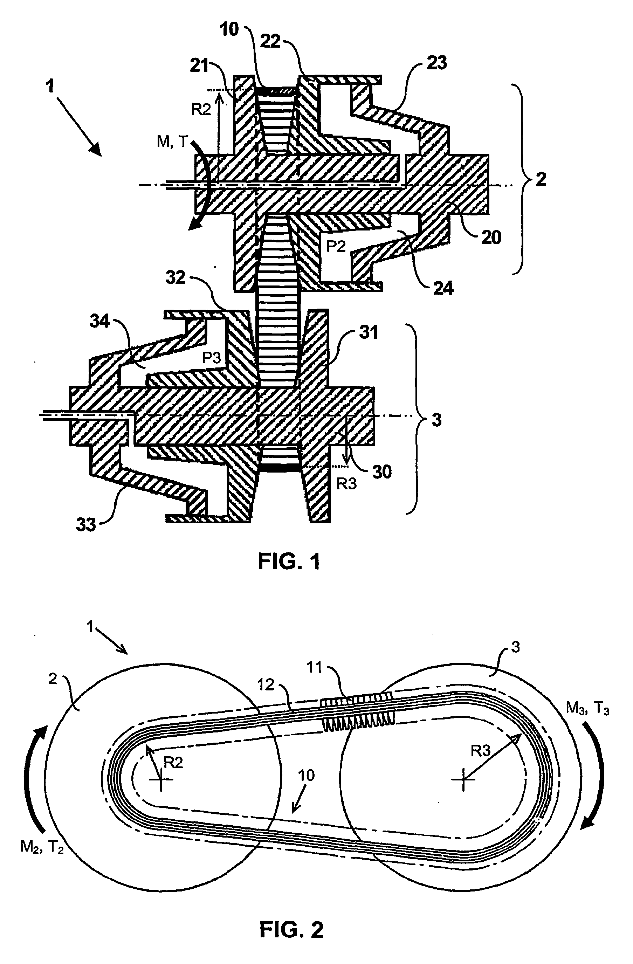

Figure 1 shows a cross-section of the central parts of a known continuously variable transmission 1 that is commonly applied in the driveline of motor vehicles between the engine and the driven wheels thereof. In figure 2 a simplified side elevation of this transmission 1 is provided.

The known transmission 1 comprises two pulleys 2 and 3, each provided with two pulley sheaves 21 and 22, respectively 31 and 32, between which a drive belt 10 is mounted for transmitting a rotational movement M and an accompanying torque T from a driving pulley 2 to a driven pulley 3. The pulley sheaves 21, 22, 31 and 32 are shaped generally conical and at least one pulley sheave 22, 32 of each pulley 2, 3 is incorporated in the transmission axially moveable along a respective pulley shaft 20, 30 on which the respective moveable sheave 22, 32 is placed. At least in the embodiment shown, the respective other sheave 21, 31 of each pulley 2, 3 is immovably fixed to, e.g. is an integral part of the respective pulley shaft 20 , 30.

During operation of the transmission 1, the drive belt 10 is clamped between the sheaves 21 and 22, respectively 31 and 32 of the pulleys 2 and 3 by applying a hydraulic pressure in the cylinder chamber 24, 34 of a piston/cylinder-assembly 22-24, 32-34 that is associated with each respective pulley 2 and 3. A transmission controller (not shown) is used to determine and realize the pressure levels P2 and P3 in the respective cylinder chambers 24 and 34, which pressure levels P2, P3 determine the torque T that can maximally be transmitted between the drive belt 10 and the respective pulleys 2, 3, as well as the geometric transmission ratio of the transmission 1. The geometric transmission ratio being determined by the quotient of an effective running radius R3 of the drive belt 10 at the driven pulley 3 and an effective running radius R2 of the drive belt 10 at the driving pulley 2, which ratio may be varied continuously in range of values.

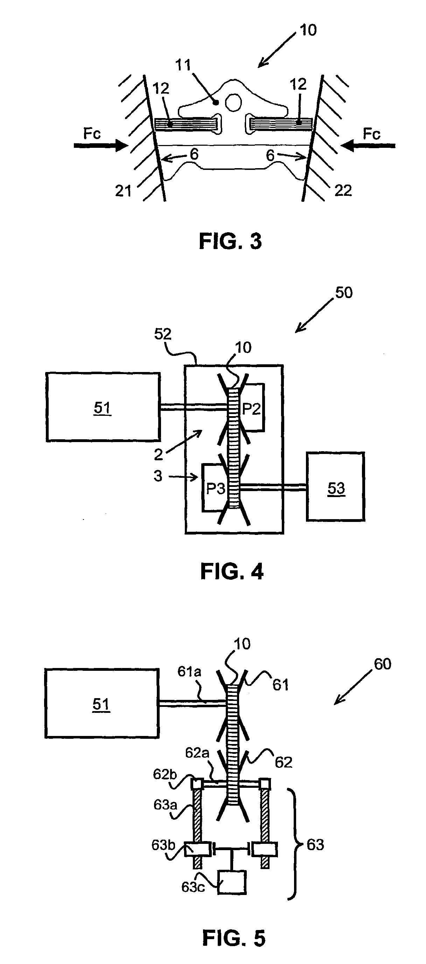

As shown in figure 2 and in more detail in the longitudinal cross-section of figure 3, the drive belt 10 is of a so-called pushbelt-type that comprises a virtually continuous series of relatively thin transverse elements 11, only some of which are shown in figure 2 for the sake of simplicity, which are provided on an endless tensile means 12 of the pushbelt 10 oriented predominantly transversely thereto in such a manner that they can slide in the longitudinal direction thereof. The tensile means 12 itself is in composed of two sets of a number of radially nested, continuous, flat and thin metal rings.

The known pushbelt 10 is shown in a longitudinal cross-section in figure 3 at a location where it is clamped between the sheaves 21 and 22 of the driving pulley 2. With such a pushbelt 10 a transmission input torque T₂ is transmitted from the driving pulley 2 to the driven pulley 3 predominantly through a compressive force exerted between the transverse elements 11 thereof, which force is realised by means of friction between with the conical sheaves 21 and 22 of the driving pulley 2 and the slanted side faces 6 of the transverse elements 11 and which force causes a torque T, in this case the transmission output torque T₃, to be generated on the driven pulley 3 also by means of friction. The tensile means 12 of the pushbelt 10 thereby prevents that the array of individual transverse elements 11 between the driving pulley 2 and the driven pulley 3 buckles under influence of the compressive force exerted between, the elements 11. Thereto the tensile means 12 is tensioned via a radially outwardly oriented force component of the pulley clamping forces Fc that results from the conical shape of the pulley sheaves 21, 22.

For monitoring the quality of the pushbelt manufacturing process it is known to destructively test randomly selected production samples. In particular it is thereby tested whether the fatigue strength of the tensile means 12, i.e. of the individual ring components thereof, satisfies a present criterion. The test device and test method applied thereby in fact constitute a representation of the actual vehicle drive line and load conditions in which the pushbelt 10 is to be applied. That is to say that the known test device 50, which is schematically illustrated in figure 4, includes a motor 51 representing the vehicle engine, a transmission 52, similar to the vehicle transmission 1 described above, and a brake 53 representing the load taken up by the driven wheels of the vehicle, whereby the motor 51, the brake 53 and the pulley clamping forces in the transmission 52, i.e. the cylinder pressure P2 and P3, all controlled and/or operated to simulate the actual application of the pushbelt 10.

A problem associated with the above known test is that it is extremely cost intensive, since a considerable power is to be generated by the motor, e.g. 200 kW or more, for a prolonged period of time, e.g. 400 hours or more. Even though Applicant has successfully developed and presently operates a test device 50 whereof the brake 53 is in the form of an electric generator or dynamo that at least partly (re-)converts the mechanical power into electric energy, the desire to (further) reduce the cost of the test continues to exist nevertheless.

According to the invention such cost reduction may be realised by the advantageously simple measure of applying a ratio between the transmission torque T and the pulley clamping forces Fc that are exerted in response thereto, which is considerably higher than in the actual application. In other words, in the novel test method less power is generated by the motor 51, while the fatigue loading of the belt 10 is maintained at the required test level by additionally tensioning in the tensile means 12, i.e. in excess of what is required to transmit the transmission torque T per se. Further, according to the invention, the said measure may even be applied to the extent that no braking of the driven pulley 3 occurs at all, such that the ratio between the transmission torque output torque T₃ and the clamping force Fc exerted by the driven pulley 3, e.g. as expressed in terms of the driven pulley cylinder pressure P3, becomes infinite. This latter feature of the invention, of course, renders the said brake 53 superfluous and allows for a favourably simplified test device 60 to be applied when carrying out pushbelt life-cycle testing in accordance with the presently discussed novel test method by leaving out the brake 53. A thus modified test device 60 is schematically illustrated in the figure 5.

In accordance with the present invention this latter test device 60 further includes the improvement, i.e. design simplification, that the clamping forces Fc are realised by forcing test pulleys 61 and 62 of the test device 60 radially apart by means of a pulley shaft displacement means 63. In this example, the pulley shaft displacement means 63 act on the driven test pulley 62, via a bearing 62b of the pulley shaft 62a thereof, by means of a screw-spindle 63a that is held, preferably in a self-locking manner, in an axially fixed nut 63b, which is rotatable by a servomotor 63c for axially displacing the spindle 63a. Thus, the radial distance between the test pulleys 61, 62 and/or the amount of tensioning of the belt 10 provided there between can be controlled by the extending and retracting the spindle 63a through the appropriate activation of the said servo motor 63c. Of course, several other types of displacement means 63 can be envisaged and are readily available, such as a piston/cylinder-unit or even a free-hanging weight that is attached to the radially displaceable pulley 62 by means of a cable.

Accordingly, also the said piston/cylinder-assemblies 22-24 and 32-34 have been rendered superfluous and can be left out of the present design of the test device 60. Instead fixed test pulleys 61, 62 are applied that define fixed running radii for the pushbelt 10 and thus also a fixed transmission ratio during the test. These test pulleys 61, 62 are preferably arranged in the test device 60 such that they can be easily exchanged with other fixed pulleys defining other running radii for testing in any desired geometric transmission ratio.

A further advantage of the test device 60 according to the invention is that it can easily accommodate pushbelts of different circumference length by setting the appropriate radial distance between the test pulleys 61, 62 by means of the displacement means 63.

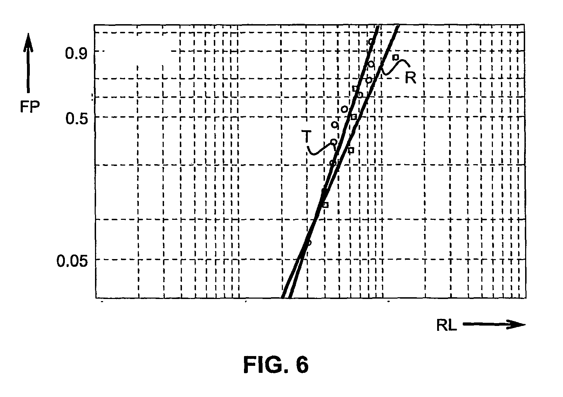

Figure 6 represents a so-called Weibull plot, which plot or diagram provides the probability of failure PF of the pushbelt 10 in relation to its relative lifespan RL under the applied test conditions. In this case such failure is the fatigue fracture of the tensile means 12 of the pushbelt 10, whereas its individual lifespan is determined by the time to failure quantified by, for instance, the number of rotations of the belt 10. Of course, a number of pushbelts 10 has to be tested individually, before such Weibull plot can be drawn. In figure 6 the squares represent test results obtained by applying the method in accordance with the present invention when using the above test device 60 according to the invention, whereas the circles represent results of reference tests using the known test device 50. The line T is a straight line, i.e. linear fit through the former test results represented by the said squares and the line R is a linear fit through the latter reference test results represented by the said circles. It may be evident from figure 6 that, when performing the test method according to the present invention, the novel test device 60 indeed yields result that are essentially identical to those that were obtained previously with the said known test device 50.

## Claims

1. Test method for determining the operational lifespan of a pushbelt (10) comprising a multitude of relatively thin transverse elements (11) that are slideably arranged in a virtually continuous series on at least one endless tensile means (12) of the belt (10), which tensile means (12) is composed of one or more flat metal rings, in particular for monitoring the end-product quality in a pushbelt (10) manufacturing process, wherein the belt (10) is mounted around a driving pulley (2; 61) and a driven pulley (3; 62) while in frictional contact with the respective conical pulley sheaves (21, 22; 31, 32) thereof, wherein the tensile means (12) is tensioned by radially outwardly oriented forces exerted on the transverse metal elements (11) by the pulleys (2, 3; 61, 62) and wherein the belt (10) and pulleys (2, 3; 61, 62) are rotated by applying an input torque (T₂) to the driving pulley (2; 61), **characterised in that** the radially outwardly oriented forces exceed what is minimally required for the belt (10) to be able to transmit the said input torque (T₂).

2. Test method according to claim 1, wherein the radially outwardly oriented forces exceed the minimally required forces by a factor of 1.5 or more, preferably more than 2.

3. Test method according to claim 1, wherein the belt (10) and pulleys (2, 3; 61, 62) are rotated substantially without an output (counter) torque (T₃) being applied to the driven pulley (3; 62).

4. Test device (60) suitable for being used in carrying out the test method according to claim 1, 2 or 3 comprising a driving test pulley (61) and a driven test pulley (62), where between a drive belt (10) to be tested can be mounted, and further a displacement means (63) capable of displacing the test pulleys (61, 62) relative to one another in a radial direction for tensioning the belt (10) to be tested, wherein a shaft (61a) of the driving test pulley (61) is rotationally connected to a motor (51), charaterised in that a shaft (62a) of the driven test pulley (62) is not connected to a load at all, i.e. can rotate freely in a bearing (62b).

5. Test device (60) according to claim 4, **characterised in that** the displacement means (63) comprise a screw-spindle (63a) held in a nut (63b), which spindle (63a) and nut (63b) are relatively rotatable by a servomotor (63c) of the displacement means (63), at least one of the spindle (63a) and the nut (63b) being the axially fixed and the respective other one component (63a, 63b) being fixed to the driven test pulley (62).

6. Test device (60) according to claim 4 or 5, **characterised in that** the test pulleys (61, 62) are each provided with fixed sheaves thus defining a fixed running radius for the pushbelt (10) to be tested.

## Patentansprüche

1. Testverfahren zur Bestimmung der Betriebslebensdauer eines Schubriemens (10), der mehrere relativ dünne Querelemente (11) umfasst, die in einer praktisch durchgehenden Reihe auf mindestens einem Endloszugmittel (12) des Riemens (10) verschiebbar angeordnet sind, wobei das Zugmittel (12) aus einem oder mehreren flachen Metallringen besteht, insbesondere zur Überwachung der Endproduktqualität in einem Herstellungsprozess für Schubriemen (10), wobei der Riemen (10) um eine Antriebsrolle (2; 61) und eine angetriebene Rolle (3; 62) herum angebracht ist, während er in Reibkontakt mit den jeweiligen Rollenriemenscheiben (21, 22; 31, 32) davon steht, wobei das Zugmittel (12) durch radial nach außen gerichtete Kräfte, die durch die Rollen (2, 3; 61, 62) auf die Metallquerelemente (11) ausgeübt werden, gespannt wird und wobei der Riemen (10) und die Rollen (2, 3; 61, 62) durch Anlegen eines Eingangsdrehmoments (T₂) an die Antriebsrolle (2; 61) gedreht werden, **dadurch gekennzeichnet, dass** die radial nach außen gerichteten Kräfte den Wert übertreffen, der mindestens erforderlich ist, damit der Riemen (10) das Eingangsdrehmoment (T₂) übertragen kann.

2. Testverfahren nach Anspruch 1, wobei die radial nach außen gerichteten Kräfte die mindestens erforderlichen Kräfte um einen Faktor von 1,5 oder darüber, vorzugsweise mehr als 2, übertreffen.

3. Testverfahren nach Anspruch 1, wobei der Riemen (10) und die Rollen (2, 3; 61, 62) im Wesentlichen ohne Anlegen eines Ausgangs- (Gegen-)Drehmoments (T₃) an die angetriebene Rolle (3; 62) gedreht werden.

4. Testvorrichtung (60), die zur Verwendung bei der Durchführung des Testverfahrens nach Anspruch 1, 2 oder 3 geeignet ist, umfassend eine Abtriebstestrolle (61) und eine angetriebene Testrolle (62), wobei dazwischen ein zu testender Antriebsriemen (10) angebracht werden kann, und weiterhin ein Verschiebungsmittel (63), das die Testrollen (61, 62) bezüglich einander in einer radialen Richtung verschieben kann, um den zu testenden Riemen (10) zu spannen, wobei eine Welle (61a) der Antriebstestrolle (61) mit einem Motor (51) drehbar verbunden ist, **dadurch gekennzeichnet, dass** eine Welle (62a) der angetriebenen Testrolle (62) mit keiner Last verbunden ist, das heißt sich in einem Lager (62b) frei drehen kann.

5. Testvorrichtung (60) nach Anspruch 4, **dadurch gekennzeichnet, dass** die Verschiebungsmittel (63) eine Schraubspindel (63a) umfassen, die in einer Mutter (63b) gehalten wird, wobei die Spindel (63a) und die Mutter (63b) durch einen Servomotor (63c) der Verschiebungsmittel (63) relativ drehbar sind, wobei die Spindel (63a) und/oder die Mutter (63b) axial festgelegt ist/sind und die jeweils andere Komponente (63a, 63b) an der angetriebenen Testrolle (62) befestigt ist.

6. Testvorrichtung (60) nach Anspruch 4 oder 5, **dadurch gekennzeichnet, dass** die Testrollen (61, 62) jeweils mit festgelegten Riemenscheiben versehen sind und somit einen festen Laufradius für den zu testenden Schubriemen (10) definieren.

## Revendications

1. Méthode d'essai pour déterminer la durée de vie fonctionnelle d'une courroie de poussée (10) comprenant une pluralité d'éléments transversaux relativement minces (11) qui sont agencés de manière coulissante en une série pratiquement continue sur au moins un moyen de traction sans fin (12) de la courroie (10), lequel moyen de traction (12) se compose d'une ou plusieurs bagues métalliques plates, en particulier pour surveiller la qualité du produit fini dans un processus de fabrication de courroies de poussée (10), la courroie (10) étant montée autour d'une poulie d'entraînement (2 ; 61) et d'une poulie entraînée (3 ; 62) tout en restant en contact de friction avec les rouets coniques respectifs de poulie (21, 22 ; 31, 32) de celles-ci, le moyen de traction (12) étant tendu par des forces orientées radialement vers l'extérieur exercées sur les éléments métalliques transversaux (11) par les poulies (2, 3 ; 61, 62) et la courroie (10) et les poulies (2, 3 ; 61, 62) étant tournées en appliquant un couple d'entrée (T₂) à la poulie d'entraînement (2 ; 61), **caractérisée en ce que** les forces orientées radialement vers l'extérieur dépassent ce qui est requis au minimum pour que la courroie (10) soit en mesure de transmettre ledit couple d'entrée (T₂).

2. Méthode d'essai selon la revendication 1, dans laquelle les forces orientées radialement vers l'extérieur dépassent les forces minimales requises d'un facteur de 1,5 ou plus, de préférence de plus de 2.

3. Méthode d'essai selon la revendication 1, dans laquelle la courroie (10) et les poulies (2, 3 ; 61, 62) sont tournées essentiellement sans qu'un couple de sortie (contre-couple) (T₃) ne soit appliqué à la poulie entraînée (3 ; 62).

4. Dispositif d'essai (60) approprié pour être utilisé pour mettre en oeuvre la méthode d'essai selon les revendications 1, 2 ou 3, comprenant une poulie d'essai d'entraînement (61) et une poulie d'essai entraînée (62), entre lesquelles peut être montée une courroie d'entraînement (10) à tester, et comprenant en outre un moyen de déplacement (63) capable de déplacer les poulies d'essai (61, 62) l'une par rapport à l'autre dans une direction radiale pour tendre la courroie (10) à tester, un arbre (61a) de la poulie d'essai d'entraînement (61) étant connecté en rotation à un moteur (51), **caractérisé en ce qu'**un arbre (62a) de la poulie d'essai entraînée (62) n'est pas connecté à une charge, c'est-à-dire qu'il peut tourner librement dans un palier (62b).

5. Dispositif d'essai (60) selon la revendication 4, **caractérisé en ce que** le moyen de déplacement (63) comprend une broche filetée (63a) retenue dans un écrou (63b), lesquels broche (63a) et écrou (63b) pouvant être tournés l'un par rapport à l'autre par un servomoteur (63c) du moyen de déplacement (63), au moins l'un de la broche (63a) et de l'écrou (63b) étant le composant fixé axialement et l'autre composant respectif (63a, 63b) étant fixé à la poulie d'essai entraînée (62).

6. Dispositif d'essai (60) selon la revendication 4 ou 5, **caractérisé en ce que** les poulies d'essai (61, 62) sont chacune pourvues de rouets fixes définissant ainsi un rayon de roulement fixe pour la courroie de poussée (10) à tester.
